# EUROPEAN PATENT APPLICATION

(11) **EP 1 791 037 A1**
(43) Date of publication of application: **30.05.2007**
(21) Application number: 05767450.9
(22) Date of filing: 01.08.2005
(51) Int. Cl.: G03H 1/02, B42D 15/10

(54) **HOLOGRAM SHEET AND METHOD FOR PRODUCING SAME, HOLOGRAM STICKER, HOLOGRAM CARD AND METHOD FOR PRODUCING SAME**

(30) Priority: 17.09.2004 JP 2004271360
(71) Applicant: Sumitomo Electric Industries, Ltd., Osaka-shi, Osaka 541-0041 (JP)
(72) Inventor: MATSUURA, Takashi, 1-1 Koyakita 1-chome Itami-shi Hyogo (JP); ODA, Kazuhiko, 1-1 Koyakita 1-chome Itami-shi Hyogo (JP); USHIRO, Toshihiko, 1-1 Koyakita 1-chome Itami-shi Hyogo (JP)
(74) Representative: HOFFMANN EITLE
(86) International application number: PCT/JP2005/014013
(87) International publication number: WO 2006/030586

(57) **Abstract**

The present invention provides a durable hologram sheet whose thickness can easily be reduced and a method for manufacturing the hologram sheet, a hologram label, and a hologram card and a method for manufacturing the hologram card.

A hologram sheet includes a sheet 1 and a translucent DLC film 2 formed on the sheet 1. The DLC film 2 includes a local region having a higher refractive index (high-refractive-index regions 2a) and a local region having a lower refractive index (low-refractive-index regions 2b). Furthermore, a print layer may be formed on at least part of a main face of the sheet 1 facing the DLC film or on at least part of a main face of the hologram sheet.

## Description

### Technical Field

The present invention relates to a hologram sheet and a method for manufacturing the hologram sheet, a hologram label including the hologram sheet, and a hologram card and a method for manufacturing the hologram card.

### Background Art

Various cards serving as securities, such as ID cards or credit cards, are often forged, falsified, or altered because of their inherent value. In recent years, holograms are used to prevent the forgery of the cards. Holograms are three-dimensional photographic images utilizing interference and diffraction of light.

Under such circumstances, in a proposed hologram card, a hologram-forming layer is laminated to a print layer formed on at least part of a card substrate (see, for example, Patent Document 1). The hologram-forming layer has an embossed surface (hologram image surface) on which interference fringes of light waves form an uneven pattern. The hologram-forming layer is therefore highly susceptible to smudges. Thus, the hologram card includes a layer for protecting the hologram-forming layer. However, the protective layer prevents a reduction in thickness of the card, makes the manufacturing process complicated, and increases the manufacturing costs.
Patent Document 1: Japanese Unexamined Patent Application Publication No. 6-286365.

### Disclosure of Invention

### Problems to be Solved by the Invention

It is an object of the present invention to provide a durable hologram sheet whose thickness can easily be reduced and a method for manufacturing the hologram sheet, a hologram label, and a hologram card and a method for manufacturing the hologram card.

### Means for Solving the Problems

The present invention provides a hologram sheet that includes a sheet and a translucent diamond-like carbon (DLC) film formed on the sheet. The DLC film includes a local region having a higher refractive index and a local region having a lower refractive index. In the hologram sheet according to the present invention, the sheet may include a print layer formed on at least part of a main face of the sheet facing the DLC film. Furthermore, in the hologram sheet according to the present invention, the hologram sheet may include a print layer formed on at least part of a main face of the hologram sheet.

The present invention also provides a hologram label that includes an adhesive layer formed on a main face of a hologram sheet or on a main face of a hologram sheet on which a print layer is formed. The sheet may include a print layer formed on at least part of a main face of the sheet facing the DLC film.

The present invention also provides a hologram card that includes a substrate and a hologram sheet stacked on an adhesive layer disposed on at least one main face of the substrate. The substrate may include a print layer formed on at least part of at least one main face thereof.

The present invention also provides a hologram card that includes a hologram sheet and a substrate. The hologram sheet includes a print layer. The substrate is stacked on an adhesive layer disposed on a main face of the hologram sheet facing the print layer.

The present invention also provides a hologram card that includes a substrate and a translucent DLC film formed on at least one main face of the substrate. The DLC film includes a local region having a higher refractive index and a local region having a lower refractive index. The substrate may include a print layer formed on at least part of at least one main face thereof.

The present invention also provides a method for manufacturing the hologram sheet, wherein the local region having a higher refractive index in the DLC film is formed by energy beam irradiation. The energy beam may be one beam selected from the group consisting of a light beam, an X-ray beam, an electron beam, and an ion beam.

The present invention also provides a method for manufacturing the hologram card, wherein the local region having a higher refractive index in the DLC film is formed by energy beam irradiation. The energy beam may be one beam selected from the group consisting of a light beam, an X-ray beam, an electron beam, and an ion beam.

### Advantageous Effect of the Invention

As described above, the present invention can provide a durable hologram sheet whose thickness can easily be reduced and a method for manufacturing the hologram sheet, a hologram label, and a hologram card and a method for manufacturing the hologram card.

### Brief Description of Drawings

Fig. 1A is a schematic cross-sectional view illustrating a method for manufacturing a hologram sheet according to the present invention. In Fig. 1A, a DLC film is formed on a translucent sheet.
Fig. 1B is a schematic cross-sectional view illustrating a method for manufacturing a hologram sheet according to the present invention. In Fig. 1B, the DLC film is irradiated with a He ion beam.
Fig. 1C is a schematic cross-sectional view illustrating a method for manufacturing a hologram sheet according to the present invention. Fig. 1C illustrates a hologram sheet according to the present invention.
Fig. 2 is a schematic cross-sectional view of another hologram sheet according to the present invention.
Fig. 3 is a schematic cross-sectional view of another hologram sheet according to the present invention.
Fig. 4A is a schematic cross-sectional view of still another hologram sheet according to the present invention. In Fig. 4A, a print layer is formed on a main face of a sheet opposite to a DLC film.
Fig. 4B is a schematic cross-sectional view of still another hologram sheet according to the present invention. In Fig. 4B, a print layer is formed on a main face of a DLC film opposite to a sheet.
Fig. 5A is a schematic cross-sectional view of a hologram label according to the present invention. In Fig. 5A, a print layer and an adhesive layer are formed on a main face of a sheet opposite to a DLC film.
Fig. 5B is a schematic cross-sectional view of a hologram label according to the present invention. In Fig. 5B, a print layer and an adhesive layer are formed on a main face of a DLC film opposite to a sheet.
Fig. 6A is a schematic cross-sectional view of another hologram label according to the present invention. In Fig. 6A, an adhesive layer is formed on a main face of a sheet opposite to a DLC film.
Fig. 6B is a schematic cross-sectional view of another hologram label according to the present invention. In Fig. 6B, an adhesive layer is formed on a main face of a DLC film opposite to a sheet.
Fig. 7A is a schematic cross-sectional view of a hologram card according to the present invention. In Fig. 7A, a main face of a substrate facing a print layer and a main face of a translucent sheet opposite to a DLC film of a hologram sheet are bonded to each other with an adhesive layer.
Fig. 7B is a schematic cross-sectional view of a hologram card according to the present invention. In Fig. 7B, a main face of a substrate facing a print layer and a main face of a DLC film opposite to a sheet of a hologram sheet are bonded to each other with an adhesive layer.
Fig. 8A is a schematic cross-sectional view of another hologram card according to the present invention. In Fig. 8A, a main face of a substrate and a main face of a translucent sheet facing a print layer of a hologram sheet are bonded to each other with an adhesive layer.
Fig. 8B is a schematic cross-sectional view of another hologram card according to the present invention. In Fig. 8B, a main face of a substrate and a main face of a DLC film facing a print layer of a hologram sheet are bonded to each other with an adhesive layer.
Fig. 9 is a schematic cross-sectional view of still another hologram card according to the present invention.
Fig. 10 is a schematic cross-sectional view of still another hologram card according to the present invention.
Fig. 11 is a schematic plan view of a two-dimensional diffraction pattern in a DLC film used for the present invention.

### Explanation of Referenced Numerals

- 1: sheet
- 1h, 2h, 3h, 5h, 12h: main face
- 2: DLC film
- 2a: high-refractive-index region
- 2b: low-refractive-index region
- 2s: interface
- 3: print layer
- 4: adhesive layer
- 11: gold mask
- 12: He ion beam

### Best Mode for Carrying Out the Invention

### FIRST EMBODIMENT

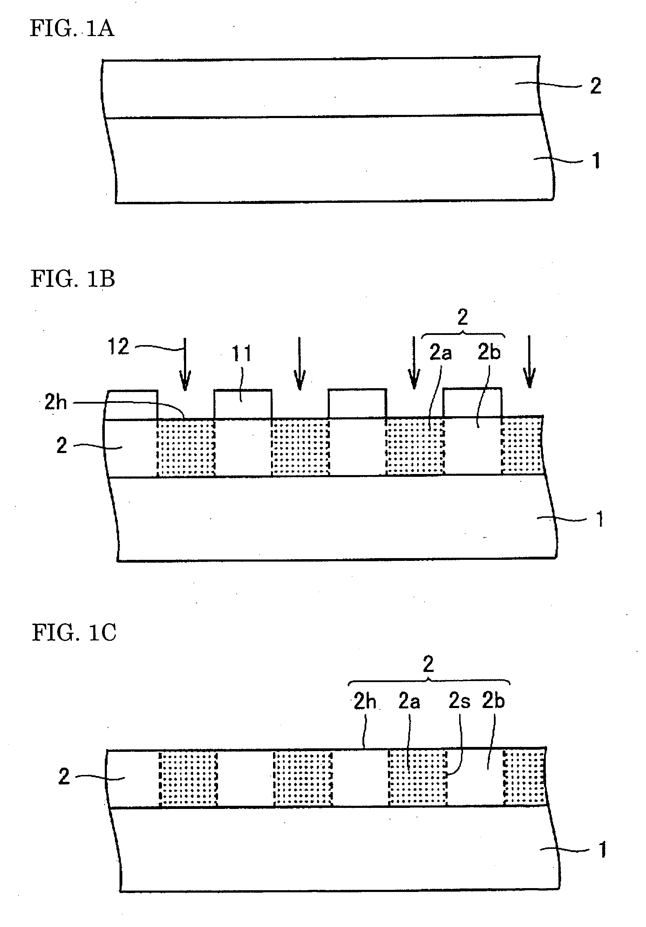

With reference to Fig. 1C, a hologram sheet according to the present invention includes a translucent sheet 1 and a translucent DLC film 2 formed on the translucent sheet 1. The DLC film 2 includes local regions having a higher refractive index (hereinafter referred to as high-refractive-index regions 2a) and local regions having a lower refractive index (hereinafter referred to as low-refractive-index regions 2b).

The hologram sheet can be placed on a substrate on which a desired image is printed to combine a hologram image and the printed image. Even when the hologram sheet is placed on a substrate on which no image is printed, one can see a hologram image alone.

In the practice of the present invention, the present inventors observed that energy beam irradiation can increase the refractive index of a translucent DLC film.

Such a DLC film can be formed on a translucent sheet, including a translucent inorganic sheet, such as a silicon sheet or a glass sheet, or a translucent organic sheet, such as a polyester sheet, an acrylic sheet, or a vinyl acetate copolymer sheet, by plasma chemical vapor deposition (CVD). A translucent DLC film formed by plasma CVD according to the present invention has a relatively low hardness (for example, Knoop hardness of less than 1000) and a relatively low refractive index (for example, about 1.55) and thus differs from existing DLC films (mainly used in tools), which have a relatively high hardness (for example, Knoop hardness of at least 2000) and a relatively high refractive index (for example, about 2.0).

An energy beam for increasing the refractive index of a DLC film according to the present invention may be an ion beam, an electron beam, a synchrotron radiation (SR) beam, or an ultraviolet (UV) beam. Among these energy beam irradiation, He ion irradiation was found to increase the maximum refractive index change Δn of a DLC film to about 0.65. SR beam irradiation can also increase the maximum refractive index change Δn of a DLC film to about 0.50. Furthermore, UV beam irradiation can also increase the maximum refractive index change Δn of a DLC film to about 0.20. These refractive index changes of a DLC film by energy beam irradiation are much larger than the refractive index changes of existing glasses by ion exchange (Δn = 0.17 at a maximum) or of quartz glasses by UV light irradiation (up to about Δn = 0.01).

The hologram sheet may be manufactured as described below. Fig. 1 is a schematic cross-sectional view illustrating a method for manufacturing the hologram sheet. In the accompanying drawings, dimensions, such as length and thickness, are appropriately changed to clarify or simplify the drawings and are not in actual size.

First, as illustrated in Fig. 1A, a DLC film 2 having a thickness of 2 µm was deposited on a translucent sheet 1 by plasma CVD. The translucent sheet 1 was a flexible polyester sheet having a refractive index of 1.6 and dimensions of 5 mm x 5 mm x 2 mm thickness. The thickness of the DLC film in the hologram sheet is not limited to a particular value and may be any value. However, it is not preferable that the DLC film has an excessively large thickness, because the light absorption of the DLC film becomes excessive. Furthermore, it is not preferable that the DLC film has an excessively small thickness, because the diffraction tends to be insufficient. A currently available DLC film preferably having a thickness of 0.5 to 10 µm is used in the hologram sheet. When the DLC film has a smaller optical absorption coefficient, the DLC film can have a larger thickness. When the DLC film has a larger rate of change in refractive index, the DLC film can have a smaller thickness.

Second, as illustrated in Fig. 1B, a gold mask 11 is formed on the DLC film 2 by a lift-off method. The gold mask 11 had gold stripes having a width of 0.5 µm and a length of 5 mm at intervals of 0.5 µm. In other words, the gold mask 11 had a line and space pattern. Subsequently, the dose amount of 5 x 10¹⁷/cm² of He ion beam 12 was applied perpendicularly to a main face 2h of the DLC film 2 through the openings of the gold mask 11 at an accelerating voltage of 800 keV.

Thus, a region of the DLC film 2 injected with no He ion became a low-refractive-index region 2b having a refractive index of 1.55. A region of the DLC film 2 injected with He ions became a high-refractive-index region 2a having a refractive index of 2.05. The difference in refractive index of the DLC film is much larger than the difference in refractive index of quartz glasses. Thus, a hologram layer having a sufficiently large diffraction efficiency can be formed.

Third, as illustrated in Fig. 1C, the gold mask 11 is etched away to produce a hologram sheet of a refractive index modulation type, in which high-refractive-index regions 2a and low-refractive-index regions 2b are formed regularly in the DLC film 2.

As described above, the hologram sheet includes the DLC film having a large refractive index variation between the high-refractive-index regions and the low-refractive-index regions. The hologram sheet therefore has large optical coherence and large optical diffraction. Hence, even when the DLC film has a small thickness, the hologram sheet has a sufficient hologram effect. In addition, because the DLC film used in the hologram sheet has a high mechanical strength and greater durability, a layer for protecting the DLC film is not required. Hence, the hologram sheet is inexpensive and has a reduced thickness.

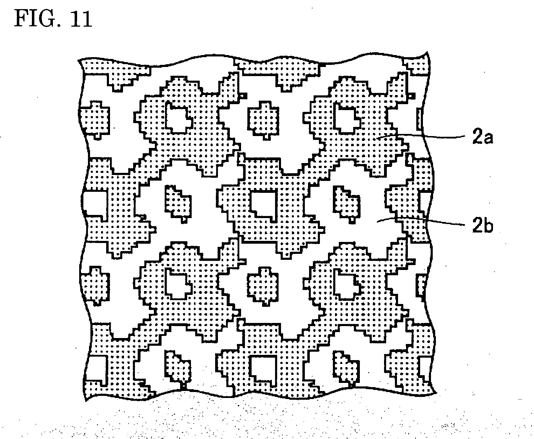

While the DLC film 2 illustrated in Fig. 1 has a one-dimensional pattern of high-refractive-index regions 2a and low-refractive-index regions 2b, a two-dimensional pattern may be formed on a DLC film to form a more complicated hologram image as illustrated in Fig. 11.

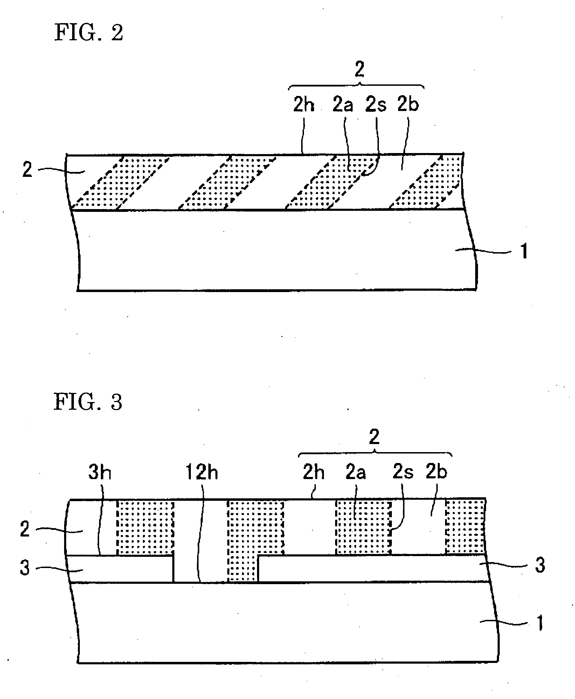

Furthermore, in Fig. 1, while the interfaces 2s between the high-refractive-index regions 2a and the low-refractive-index regions 2b in the DLC film 2 are perpendicular to the main face 2h of the DLC film 2, a He ion beam may be applied at a certain angle to the main face of the DLC film to form a DLC film 2 as illustrated in Fig. 2, in which the interfaces 2s between the high-refractive-index regions 2a and the low-refractive-index regions 2b are tilted relative to the main face 2h of the DLC film 2.

Although not shown, the thickness of a mask layer for blocking a He ion beam may be changed to continuously change the refractive index in the vicinity of the interfaces between the high-refractive-index regions and the low-refractive-index regions.

### SECOND EMBODIMENT

With reference to Fig. 3, another hologram sheet according to the present invention includes a sheet 1, a translucent DLC film 2 formed on the sheet 1, and a print layer 3 formed on part of a main face 12h of the sheet 1 facing the DLC film 2. The DLC film 2 includes high-refractive-index regions 2a and low-refractive-index regions 2b.

In the hologram sheet, because the print layer 3 is formed on at least part of a main face 12h of the sheet 1 facing the DLC film 2 and the DLC film 2 includes the high-refractive-index regions 2a and the low-refractive-index regions 2b, when one looks at an image printed on the print layer 3 from a main face 2h of the DLC film 2, he or she can see a combined image of a hologram image and the printed image. In the present embodiment, because an image printed on the print layer 3 is seen only through the DLC film 2, the sheet 1 is not necessarily translucent.

The hologram sheet may be manufactured as described below. First, with reference to Fig. 3, a print layer 3 is formed on at least part of a main face 12h of a sheet 1 (this main face is a main face on which a DLC film is to be formed). The print layer 3 may be formed on the sheet 1 by any method, including printing, such as screen printing. The material (ink) of the print layer 3 may also be any material. Since the DLC film 2 is formed, for example, by plasma CVD directly on the main face 12h on which the print layer 3 is formed, the material of the print layer 3 preferably has a heat resistance of at least 100°C.

Second, a DLC film 2 having a thickness of 4 µm is formed by plasma CVD on part of the main face 12h of the sheet 1 on which no print layer 3 is formed and on a main face 3h of the print layer 3. Third, as in the first embodiment, high-refractive-index regions 2a and low-refractive-index regions 2b are formed in the DLC film 2.

### THIRD EMBODIMENT

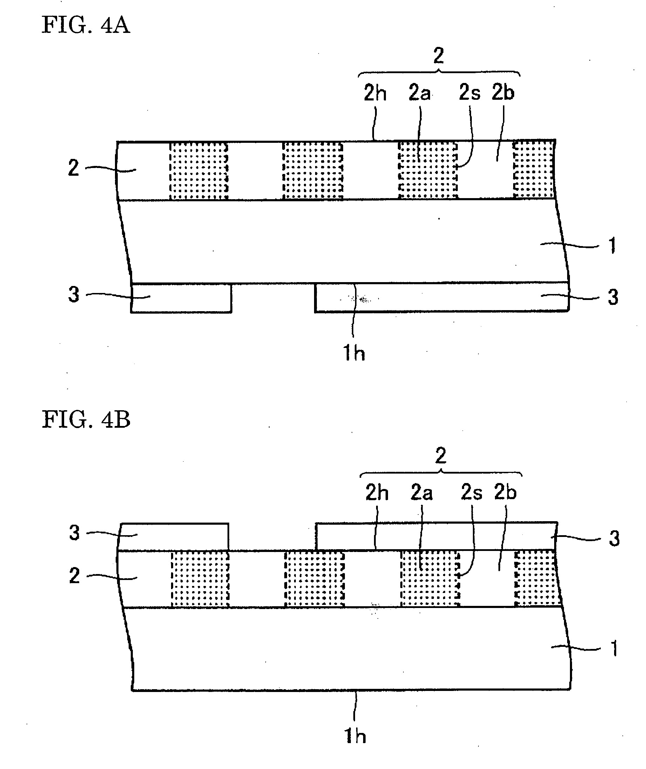

With reference to Fig. 4, a still another hologram sheet according to the present invention includes a print layer 3 formed on at least part of a main face 1h of a translucent sheet 1 opposite to a DLC film 2 or a main face 2h of the DLC film 2 opposite to the sheet 1 of the hologram sheet according to the first embodiment.

Since the DLC film of the hologram sheet includes high-refractive-index regions and low-refractive-index regions, when one looks at an image printed on the print layer 3 formed on a main face 1h of the translucent sheet 1 of the hologram sheet from a main face 2h of the DLC film 2, or when one looks at an image printed on the print layer 3 formed on a main face 2h of the DLC film 2 of the hologram sheet from a main face 1h of the translucent sheet 1, he or she can see a combined image of a hologram image and a printed image.

As described above, the hologram sheet includes the DLC film having a large refractive index variation between the high-refractive-index regions and the low-refractive-index regions. The DLC film exhibits large optical coherence and large optical diffraction. Hence, even when the DLC film has a small thickness, the hologram sheet has a sufficient hologram effect. In addition, because the DLC film used in the hologram sheet has a high mechanical strength and greater durability, a layer for protecting the DLC film is not required. Hence, the hologram sheet is inexpensive and has a reduced thickness.

With reference to Fig. 4, in the hologram sheet, the print layer 3 may be formed by any method, including printing, such as screen printing, on at least part of a main face 1h of the translucent sheet 1 or the main face 2h of the DLC film 2 of the hologram sheet according to the first embodiment. The material (ink) of the print layer 3 may also be any material.

### FOURTH EMBODIMENT

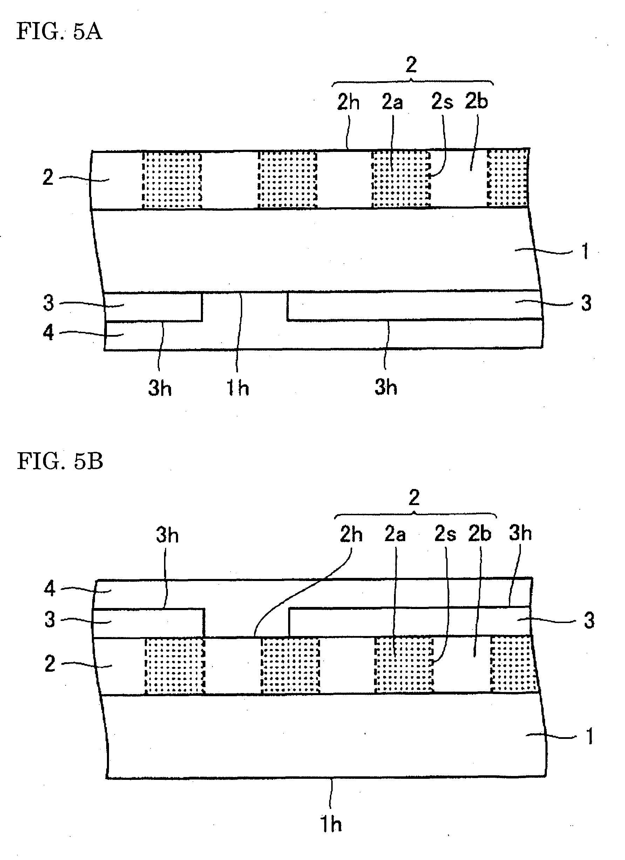

With reference to Fig. 5, a hologram label according to the present invention includes an adhesive layer 4 formed on a main face of a sheet facing the print layer 3 of the hologram sheet according to the second embodiment. More specifically, with reference to Fig. 5A, in the hologram label, when the print layer 3 is formed on at least part of a main face 1h of a translucent sheet 1, the adhesive layer 4 is formed on a main face 3h of the print layer 3 and the main face 1h of the translucent sheet 1 on which no print layer is formed. With reference to Fig. 5B, in the hologram label, when the print layer 3 is formed on at least part of a main face 2h of a DLC film 2, the adhesive layer 4 is formed on a main face 3h of the print layer 3 and the main face 2h of the DLC film 2 on which no print layer is formed.

The hologram label may be fixed on any substrate to provide a hologram image easily. As described above, the hologram label includes a DLC film having a large refractive index variation between high-refractive-index regions and low-refractive-index regions. The hologram label therefore has large optical coherence and large optical diffraction. Hence, even when the DLC film has a small thickness, the hologram label has a sufficient hologram effect. In addition, because the DLC film used in the hologram label has a high mechanical strength and greater durability, a layer for protecting the DLC film is not required. Hence, the hologram sheet is inexpensive and has a reduced thickness.

In the hologram label, the adhesive layer 4 may be formed on at least part of the print layer 3 and a main face 1h of the translucent sheet 1 or on the main face 2h of the DLC film 2 of the hologram sheet according to the second embodiment by any method. Preferably, the adhesive layer 4 may be formed by applying an adhesive serving as a raw material of the adhesive layer to the main face of the hologram sheet with a spin coater or by bonding a heat-sensitive adhesive film to the main face of the hologram sheet. The material of the adhesive layer 4 may also be any translucent material and preferably is a polyester resin or a vinyl acetate resin.

### FIFTH EMBODIMENT

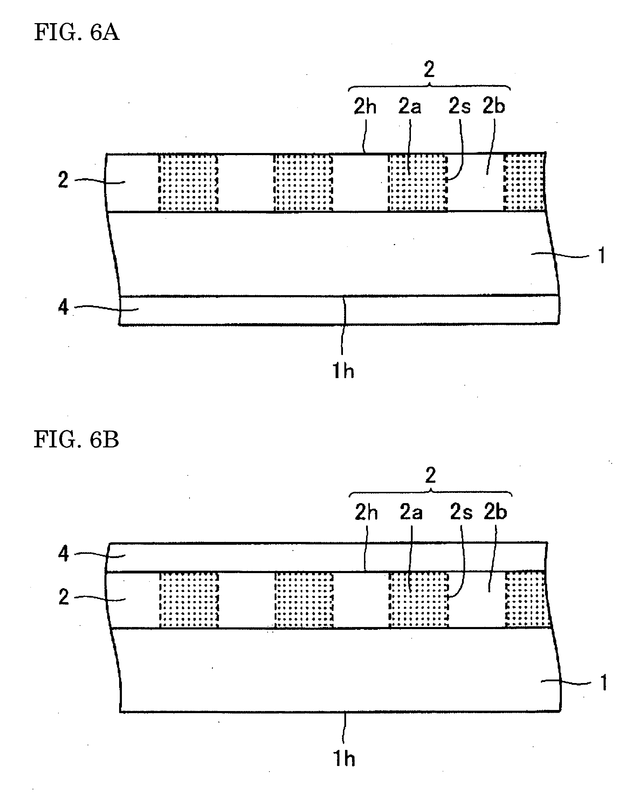

With reference to Fig. 6, another hologram label according to the present invention includes an adhesive layer 4 formed on a main face of the hologram sheet according to the first embodiment. More specifically, the adhesive layer 4 of the hologram label is formed on a main face 1h of the translucent sheet 1 (Fig. 6A) or a main face 2h of the DLC film 2 (Fig. 6B) of the hologram sheet according to the first embodiment.

The hologram label may be fixed on a print layer of any substrate including the print layer to easily combine a hologram image and a printed image. As described above, the hologram label includes a DLC film having a large refractive index variation between high-refractive-index regions and low-refractive-index regions. The hologram sheet therefore has large optical coherence and large optical diffraction. Hence, even when the DLC film has a small thickness, the hologram label has a sufficient hologram effect. In addition, because the DLC film used in the hologram label has a high mechanical strength and greater durability, a layer for protecting the DLC film is not required. Hence, the hologram sheet is inexpensive and has a reduced thickness.

In the hologram label, the adhesive layer 4 may be formed on a main face 1h of the translucent sheet 1 or on the main face 2h of the DLC film 2 of the hologram sheet according to the first embodiment by any method. Preferably, the adhesive layer 4 may be formed by applying an adhesive serving as a raw material of the adhesive layer to the main face of the hologram sheet with a spin coater or by bonding a heat-sensitive adhesive film to the main face of the hologram sheet. The material of the adhesive layer 4 may also be any translucent material and preferably is a polyester resin or a vinyl acetate resin.

### SIXTH EMBODIMENT

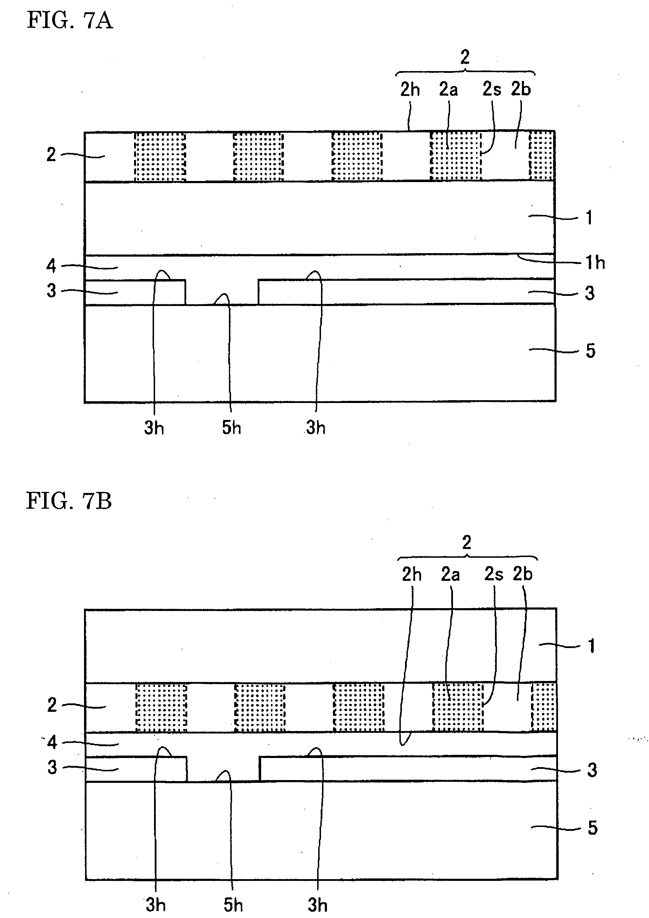

With reference to Fig. 7, a hologram card according to the present invention includes a substrate 5 and the hologram sheet according to the first embodiment. A print layer 3 is formed on at least part of at least one main face 5h of the substrate 5. The hologram sheet is stacked via an adhesive layer 4 on at least one main face 3h and 5h of main faces of the substrate 5 on which a print layer 3 is formed. With reference to Fig. 7A, in the hologram card, main faces 3h and 5h of the print layer 3 and the substrate 5 may be bonded to a main face 1h of the translucent sheet 1 of the hologram sheet according to the first embodiment with the adhesive layer 4. Alternatively, with reference to Fig. 7B, main faces 3h and 5h of the print layer 3 and the substrate 5 may be bonded to a main face 2h of the DLC film 2 of the hologram sheet according to the first embodiment with the adhesive layer 4.

When the hologram sheet according to the first embodiment is placed on a print layer formed on a substrate, one can see a combined image of an image printed on the print layer 3 and a hologram image. When no print layer is formed on a substrate, one can see a hologram image alone.

A substrate of the hologram card may be any substrate, provided that a print layer, an adhesive layer, or another layer can be formed or stacked on the substrate and that a hologram sheet can be stacked on the substrate. Preferably, a polyester substrate, a silicon substrate, or a glass substrate may be used.

As described above, the hologram card includes a hologram sheet that includes a DLC film having a large refractive index variation between high-refractive-index regions and low-refractive-index regions. The hologram card therefore has large optical coherence and large optical diffraction. Hence, even when the DLC film has a small thickness, the hologram card has a sufficient hologram effect. In addition, because the DLC film used in the hologram card has a high mechanical strength and greater durability, a layer for protecting the DLC film is not required. Hence, the hologram card is inexpensive and has a reduced thickness.

With reference to Fig. 7, the hologram sheet according to the first embodiment may be stacked on the substrate 5, in which the print layer 3 is formed on at least part of a main face, with the adhesive layer 4 by any method. For example, the print layer 3 is first formed on at least part of at least one main face 5h of the substrate 5. Then, an adhesive is applied to the main faces 3h and 5h of the print layer 3 and the substrate 5. Finally, the hologram sheet according to the first embodiment is stacked on the adhesive layer. Alternatively, after the print layer 3 is formed on at least part of at least one main face of the substrate 5, the hologram label according to the fourth embodiment may be bonded to the main faces 3h and 5h of the print layer 3 and the substrate 5.

Furthermore, the print layer 3 may be formed on the substrate 5 by any method, including printing, such as screen printing. The material (ink) of the print layer 3 may also be any material.

### SEVENTH EMBODIMENT

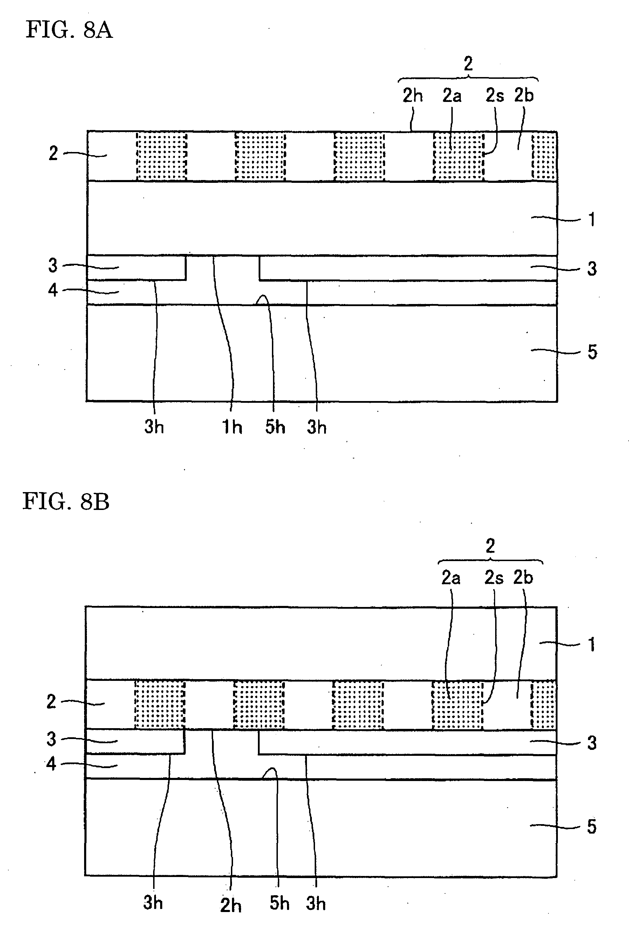

With reference to Fig. 8, another hologram card according to the present invention includes the hologram sheet according to the second embodiment and a substrate 5 stacked on a main face of the hologram sheet facing a print layer 3 with an adhesive layer 4. With reference to Fig. 8A, in the hologram card, a main face 5h of the substrate 5 may be bonded to main faces 1h and 3h of the translucent sheet 1 and the print layer 3 of the hologram sheet with the adhesive layer. Alternatively, with reference to Fig. 8B, the main face 5h of the substrate 5 may be bonded to main faces 2h and 3h of the DLC film 2 and the print layer 3 of the hologram sheet with the adhesive layer.

When the main face 5h of the substrate 5 faces a main face of the hologram sheet facing the print layer 3 according to the second embodiment, one can see a combined image of an image printed on the print layer 3 and a hologram image due to optical coherence and optical diffraction by high-refractive-index regions 2a and low-refractive-index regions 2b of the hologram sheet.

As described above, the hologram card includes a hologram sheet that includes a DLC film having a large refractive index variation between high-refractive-index regions and low-refractive-index regions. The hologram card therefore has large optical coherence and large optical diffraction. Hence, even when the DLC film has a small thickness, the hologram card has a sufficient hologram effect. In addition, because the DLC film used in the hologram card has a high mechanical strength and greater durability, a layer for protecting the DLC film is not required. Hence, the hologram card is inexpensive and has a reduced thickness.

With reference to Fig. 8, the substrate 5 may be stacked on the hologram sheet according to the second embodiment with the adhesive layer 4 by any method. For example, an adhesive is first applied to the main face 5h of the substrate 5. Then, a main face of the hologram sheet facing the print layer 3 according to the second embodiment is bonded to the adhesive layer. Alternatively, the main face of the substrate 5 may be bonded to the hologram label according to the third embodiment.

### EIGHTH EMBODIMENT

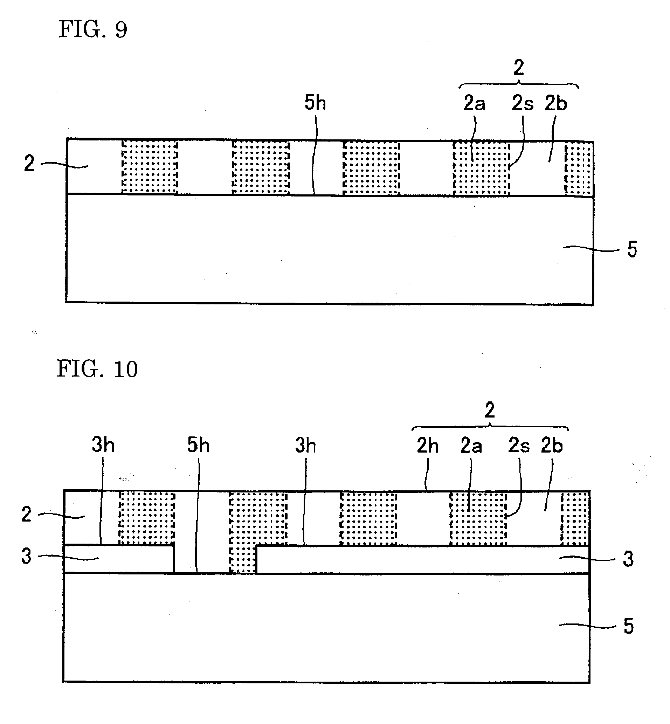

With reference to Fig. 9, still another hologram card according to the present invention includes a substrate 5 and a translucent DLC film 2 formed on the substrate 5. The DLC film 2 includes high-refractive-index regions 2a and low-refractive-index regions 2b. The substrate 5 may be any substrate, provided that the DLC film can be formed on the substrate. A polyester substrate, a silicon substrate, or a glass substrate is preferably used.

In the hologram card, the DLC film 2 including the high-refractive-index regions 2a and the low-refractive-index regions 2b is formed on a main face 5h of the substrate 5. Thus, the hologram card can be placed on a substrate on which a desired image is printed to combine a hologram image and the printed image. Even when the hologram card is placed on a substrate on which no image is printed, one can see a hologram image alone. Furthermore, since the DLC film 2 is formed directly on the substrate 5, an inexpensive thin hologram card can easily be manufactured.

### NINTH EMBODIMENT

With reference to Fig. 10, still another hologram card according to the present invention includes a substrate 5 and a DLC film 2. A print layer 3 is formed on at least part of at least one main face 5h of the substrate 5. The DLC film 2 is formed on at least one main face 3h and 5h of main faces of the substrate 5 on which the print layer 3 is formed. The DLC film 2 includes high-refractive-index regions 2a and low-refractive-index regions 2b.

In the hologram card, the DLC film 2 including the high-refractive-index regions 2a and the low-refractive-index regions 2b is formed on main faces 3h and 5h of the print layer 3 and the substrate 5. Thus, one can see a combined image of an image printed on the print layer 3 and a hologram image.

Furthermore, in the hologram card, since the DLC film 2 is formed directly on the main faces 3h and 5h of the print layer 3 and the substrate 5 without an adhesive layer, a more inexpensive and thinner hologram card can be manufactured.

The hologram card may be manufactured as described below. With reference to Fig. 10, first, the print layer 3 is formed on at least part of at least one main face 5h of the substrate 5. The print layer 3 is formed on the substrate 5 as in the fifth embodiment. In the present embodiment, since the DLC film 2 is formed, for example, by plasma CVD directly on the main faces 3h and 5h of the print layer 3 and the substrate 5, the material of the print layer 3 preferably has a heat resistance of at least 100°C.

Second, the DLC film 2 having a thickness of 4 µm is formed on the main faces 3h and 5h of the print layer 3 and the substrate 5 by plasma CVD. Third, as in the first embodiment, the high-refractive-index regions 2a and the low-refractive-index regions 2b are formed in the DLC film 2.

It is to be understood that the embodiments disclosed herein are illustrated by way of example and not by way of limitation in all respects. The scope of the present invention is defined by the appended claims rather than by the description preceding them. All changes that fall within the scope of the claims and the equivalence thereof are therefore intended to be embraced by the claims.

### Industrial Applicability

A hologram sheet, a hologram label, and a hologram card thus manufactured are inexpensive and have low profiles. Hence, these can widely be used in cards, such as ID cards, credit cards, and prepaid cards, paper money, gift certificates, and certificates.

## Claims

1. A hologram sheet comprising:
a sheet; and
a translucent DLC film formed on the sheet,
wherein the DLC film includes a local region having a higher refractive index and a local region having a lower refractive index.

2. The hologram sheet according to Claim 1, wherein the sheet comprises a print layer formed on at least part of a main face of the sheet facing the DLC film.

3. A hologram label comprising an adhesive layer formed on a main face of the hologram sheet according to Claim 1 or 2.

4. A hologram sheet comprising a print layer formed on at least part of a main face of the hologram sheet according to Claim 1.

5. A hologram label comprising an adhesive layer formed on a main face of the hologram sheet according to Claim 4 facing the print layer.

6. A hologram card comprising:
a substrate; and
the hologram sheet according to Claim 1 stacked on an adhesive layer disposed on at least one main face of the substrate.

7. The hologram card according to Claim 6, wherein the substrate comprises a print layer formed on at least part of at least one main face thereof.

8. A hologram card comprising:
the hologram sheet according to Claim 4; and
a substrate stacked on an adhesive layer disposed on a main face of the hologram sheet facing the print layer.

9. A hologram card comprising:
a substrate; and
a translucent DLC film formed on at least one main face of the substrate,
wherein the DLC film includes a local region having a higher refractive index and a local region having a lower refractive index.

10. The hologram card according to Claim 9, wherein the substrate comprises a print layer formed on at least part of at least one main face thereof.

11. A method for manufacturing the hologram sheet according to Claim 1, wherein the local region having a higher refractive index in the DLC film is formed by energy beam irradiation.

12. The method for manufacturing the hologram sheet according to Claim 11, wherein the energy beam is one beam selected from the group consisting of a light beam, an X-ray beam, an electron beam, and an ion beam.

13. A method for manufacturing the hologram card according to Claim 9, wherein the local region having a higher refractive index in the DLC film is formed by energy beam irradiation.

14. The method for manufacturing the hologram card according to Claim 13, wherein the energy beam is one beam selected from the group consisting of a light beam, an X-ray beam, an electron beam, and an ion beam.
